# EUROPÄISCHE PATENTSCHRIFT

(11) **EP 1 235 988 B1**
(45) Veröffentlichungstag und Bekanntmachung des Hinweises auf die Patenterteilung: **21.12.2005**
(21) Anmeldenummer: 00977575.0
(22) Anmeldetag: 25.11.2000
(51) Int. Cl.: F16B 35/04, E04F 13/08, F16B 35/06, F16B 25/10

(54) **SCHRAUBE ZUR ABSTANDSBEFESTIGUNG VON ABDECKPLATTEN ODER SCHIENEN AN EINEM UNTERBAU**
BOLT FOR FIXING, AT A DISTANCE, COVERING PLATES OR RAILS ON A SUBSTRUCTURE
VIS POUR FIXER AVEC UN ECART, DES PANNEAUX DE RECOUVREMENT OU DES RAILS SUR UNE INFRASTRUCTURE

(30) Priorität: 10.12.1999 DE 19959672
(43) Veröffentlichungstag der Anmeldung: 04.09.2002
(73) Patentinhaber: SFS intec Holding AG, 9435 Heerbrugg (CH)
(72) Erfinder: KOEPPEL, Norbert, CH-9434 Au (CH); THURNHERR, Ernst, CH-9444 Diepoldsau (CH)
(86) Internationale Anmeldenummer: PCT/EP2000/011768
(87) Internationale Veröffentlichungsnummer: WO 2001/042669

(56) Entgegenhaltungen:
- WO-A-99/31395
- DE-A- 19 734 785
- GB-A- 2 169 051

## Beschreibung

Die Erfindung betrifft eine Schraube zur Abstandsbefestigung von Abdeckplatten oder Schienen an einem Unterbau.

Es sind bereits zur Abstandsbefestigung einzusetzende Schrauben bekannt geworden, welche mit zwei Gewindebereichen verschiedenen Durchmessers ausgestattet sind, wobei im fertig gesetzten Zustand beide Gewindebereiche im Eingriff mit dem Unterbau und den zu befestigenden Teilen sind. Solche Schrauben werden in der Regel bei einem relativ dicken Unterbau und dicken zu befestigenden Teilen, wie z.B. Holzlatten, eingesetzt, wobei im Unterbau eine entsprechende Einschraubtiefe oder die Möglichkeit zur Anbringung eines Dübels gegeben sein muß.

Für den Einsatz bei einem Unterbau aus dünnem Material oder bei einem zu befestigenden Teil geringer Dicke sind solche Schrauben nicht geeignet.

Eine Ausgestaltung der eingangs genannten Art ist in der WO99/31395 beschrieben und gezeigt. Es geht dort um eine Schraube zur Abstandsbefestigung von Abdeckplatten oder Schienen an einem Unterbau, welche zwei Schaftabschnitte unterschiedlichen Durchmessers aufweist, wobei an dem Schaftabschnitt mit dem kleineren Durchmesser und somit am freien Ende der Schraube ein Bohrteil ausgebildet ist. Bei dieser Konstruktion müssen die Abdeckplatten oder Schienen vorgebohrt werden, um den Schaftabschnitt mit dem größeren Durchmesser einführen zu können. Im Unterbau wird dann die Bohrung durch den am freien Ende der Schraube ausgebildeten Bohrteil hergestellt.

Aus der US 3,478,639 ist eine Schraube zur Abstandsbefestigung bekannt, mit der Isoliermaterial zwischen einer Abdeckplatte und einem dickeren Bauelement befestigt werden kann. Die Schraube weist zwei Schaftabschnitte mit unterschiedlichen Gewindebereichen und einen dazwischen liegenden gewindefreien Bereich auf. Der vom Schraubenkopf entfernt angeordnete Gewindeabschnitt endet an seinem dem Schraubenkopf zugewandten Ende unmittelbar an zwei entgegengesetzt angeordneten, flügelförmigen Ansätzen, welche im fertig gesetzten Zustand an dem dicken Bauelement anschlagen. Die flügelförmigen Ansätze verhindern zwar ein tieferes Einschrauben und damit eine Komprimierung des Isoliermaterials, jedoch sind hier im fertig gesetzten Zustand beide Gewindebereiche mit der Abdeckplatte bzw. dem dicken Bauelement im Eingriff, so daß ein Überdrehen der Schraube zu einer Lockerung der Befestigung führt.

Die DE 90 05 561 U1 zeigt eine Art Schraubenverlängerung, wobei die gegenseitige Verbindung über eine zusammenpreßbare Hülse erzielt wird. Der Bohrteil weist eine übliche Bohrspitze auf, einen sich daran anschließenden Gewindeschaftteil und am oberen Ende des Gewindeschaftteils eine radiale Erweiterung, die in einem konischen Abschnitt in den Gewindeschaftteil übergeht. Der konische Übergang weist zwar radial verlaufende Rippen oder ähnliche räumende Ausformungen auf, doch ist in diesem Bereich kein gewindefreier Schaftabschnitt vorgesehen, mit welchem sich die Schraube in dem Unterbau ohne Probleme überdrehen könnte.

Auch bei einer aus der WO00/20767 bekannten Schraube ist keinerlei Möglichkeit vorhanden, daß sich die Schraube im Unterbau überdrehen könnte. Gerade aus dem Anwendungsbeispiel in Fig. 15 ist ersichtlich, daß das Gewinde im Unterbau im Eingriff ist, und daß hier keine gewindefreie Zone vorhanden oder irgendwie geplant ist, die Schraube hier überdrehen zu lassen.

Bei der JP 09303356 A geht es um eine Schraube, die mit Abstand zueinander zwei oder drei Bohrelemente aufweist, wobei radial abstehende Bohrflügel nach dem Durchdringen des zu befestigenden (weicheren) Teiles bei dem Auftreffen auf ein Metallprofil abbrechen. Diese Bohrflügel sind dann also anschließend nicht mehr vorhanden. Schließlich ist ein entsprechender Kopf vorhanden, der an seiner Unterseite Rippen aufweist, um die Schraube entsprechend ansenken zu können. Auch bei dieser bekannten Schraube ist an keiner Stelle in irgendeiner Weise ein gewindefreier Schaftabschnitt vorhanden, in welchem die Schraube sowohl im Unterbau als auch in dem zu befestigenden Teil überdrehen könnte.

Die vorliegende Erfindung hat sich zur Aufgabe gestellt, eine Schraube der eingangs genannten Art zu schaffen, welche ohne einen zusätzlichen Arbeitsgang des Vorbohrens in besonderer Weise zur Abstandsbefestigung dünnwandiger Teile an einem dünnwandigen Unterbau eingesetzt werden kann.

Erfindungsgemäß wird diese Aufgabe durch die Merkmale gemäß Anspruch 1 gelöst.

Mit diesen erfindungsgemäßen Maßnahmen ist auch bei dünnwandigen Elementen eine echte Abstandsbefestigung möglich, da im fertig gesetzten Zustand einer solchen Schraube sowohl die Abdeckplatten oder Schienen als auch das Material des Unterbaues in den gewindefreien Bereich eingreifen und dort in axialer Richtung gesichert gehalten werden. Von Vorteil ist dabei, daß die Schraube in diesem Setzzustand in Eindrehrichtung weiter verdreht werden kann, ohne daß sich diese weiter in den Untergrund einbohrt und einschraubt. Sobald die Schraube die zu befestigenden Abdeckplatten oder Schienen und den Unterbau durchdrungen hat, ist keiner der Gewindebereiche mehr im Eingriff mit dem zu befestigenden Teil bzw. dem Unterbau.

Durch die erfindungsgemäßen Maßnahmen kann in einem Arbeitsgang die Bohrung, welche nur den Durchtritt des Schaftabschnittes mit kleinerem Durchmesser ermöglicht, entsprechend erweitert werden, damit sofort der Schaftabschnitt größeren Durchmessers eindringen kann. Solange dieser Bohrabschnitt gegen die zu befestigenden Abdeckplatten oder Schienen angepreßt wird, ist der erforderliche Bohrdruck gegeben, und es folgt auch ein Bohrvorgang. Sobald aber der Setzvorgang der erfindungsgemäßen Schraube beendet ist, wenn also der Schraubenkopf an der Oberseite der Abdeckplatten oder Schienen zur Anlage kommt und wenn wegen der besonderen Ausbildung mit zwei gewindefreien Bereichen die Schraube ohne Gewindeeingriff in irgendwelchen Teilen frei drehen kann, ist auch kein Bohrdruck mehr auf den Bohrabschnitt am Übergang zwischen den zwei Schaftabschnitten gegeben, so daß dieser Bohrabschnitt nur noch die Funktion des Abstützens hat. Da also in dem gesetzten Zustand die Schraube nicht mehr weiter radial verdreht wird und auch kein axialer Druck mehr entsteht, kann es nicht zu einem weiteren Bohrvorgang durch den Bohrabschnitt in dem Unterbau kommen, und zwar unabhängig davon, wie nun dieser Bohrabschnitt konstruktiv gestaltet ist.

Somit ist nicht nur eine einwandfreie Abstandsbefestigung möglich, sondern auch die Gewähr einer entsprechenden Sicherheit gegen ein Lösen der Schraube gegeben. Wenn unter dem Kopf der Schraube zusätzlich noch eine Unterleg- und/oder Dichtscheibe eingesetzt ist, sorgt diese nach dem Einschraubvorgang für einen axialen Druck, so daß die zu befestigenden Abdeckplatten oder Schienen und die Unterleg- und/oder Dichtscheibe mit einer entsprechenden axialen Vorspannung im gewindefreien Bereich unterhalb des Kopfes der Schraube gehalten sind.

Die beschriebene Schraube eignet sich in besonderer Weise für die Abstandsbefestigung von Abdeckplatten oder Schienen an einem Unterbau, selbst auch dann, wenn noch weiche Isoliermaterialien dazwischengeschaltet sind.

Bei der gegenseitigen Befestigung von zwei dünnen Blechen ist es ebenfalls bereits bekannt, diese so miteinander zu verbinden, daß sie in den gewindefreien Bereich zwischen einem Gewindebereich und dem Kopf einer Schraube, gegebenenfalls zusammen mit einer Unterlegscheibe, eingreifen. Die Schraube kann dadurch beim Setzvorgang entsprechend überdreht werden, da der Gewindebereich in der endgültigen Stellung der gesetzten Schraube nicht mehr im Eingriff ist. Obwohl eine solche Schraube für die gegenseitige Befestigung direkt aneinander liegender dünner Bleche eingesetzt wird, sind keine Hinweise auf die Schraube gemäß der vorliegenden Erfindung gegeben.

Die Abstandsbefestigung von dünnwandigen Elementen ohne dazwischenliegende feste Teile und ohne ein vorhergehendes Vorbohren der zu befestigenden Teile wird erst mit einer konstruktiven Ausführung gemäß der vorliegenden Erfindung möglich.

Bei einer besonderen Ausgestaltung der Schraube wird vorgeschlagen, daß der Bohrabschnitt am Übergang an einem an den in Richtung zum Kopf der Schraube nächstfolgenden Schaftabschnitt angeordneten Anschlagbund ausgebildet ist. Dadurch ist eine noch bessere Abstützung der Schraube im Bereich des hier vorgesehenen gewindefreien Bereiches möglich. Trotz Anordnung eines Bohrabschnittes ist eine optimale Abstützung durch den Übergang möglich.

Eine weitere Ausführungsvariante sieht vor, daß der Bohrabschnitt von zwei oder mehreren, kurzen Bohrnuten und -schneiden am Übergang zwischen den beiden Schaftabschnitten gebildet ist. Es kann hier also eine sehr einfache Konstruktion eines Bohrabschnittes eingesetzt werden, da es mit diesem Bohrabschnitt nur erforderlich ist, eine bereits bestehende Bohrung entsprechend aufzuweiten.

Um diesem Bohrabschnitt die Wirkung nach Art eines Bohrers zu verleihen, wird vorgeschlagen, daß die Bohrnuten und -schneiden des Bohrabschnittes in Eindrehrichtung der Schraube gesehen spitzwinklig zur Schraubenachse geneigt sind. Es ergibt sich dadurch auch ein entsprechender Schneidenwinkel, so daß die Spanbildung bei der Aufweitung der Bohrung optimiert werden kann.

In diesem Zusammenhang ist es auch vorteilhaft, wenn die Bohrschneiden und gegebenenfalls auch die Bohrnuten des Bohrabschnittes den Übergang geringfügig in Richtung zum freien Ende der Schraube hin überragen. Es kommen somit Bereiche dieses Bohrabschnittes zum Einsatz, bevor der Übergang selbst oder ein den Übergang bildender Anschlagbund auf der zu durchbohrenden Abdeckplatte oder Schiene zur Anlage kommt.

Eine weitere Ausführungsvariante wird darin gesehen, daß der Bohrabschnitt von einer Vielzahl von am Übergang angeordneten, radial ausgerichteten, eine Art Sägezahnung darstellenden und spitzwinklig zur Schraubachse verlaufenden Schneidkanten gebildet ist. Eine solche Art eines Bohrabschnittes wird in der Regel dann eingesetzt, wenn eine Ansenkung für einen Schraubenkopf oder dergleichen hergestellt werden soll. Da mit dem Bohrabschnitt bei der erfindungsgemäßen Konstruktion lediglich ein bereits vorhandenes Loch entsprechend aufgeweitet werden muß, ist auch eine solche Konstruktion optimal einsetzbar.

Aus Fertigungsgründen und aus Gründen einer sehr guten Bohrleistung ist es zweckmäßig, wenn der Anschlagbund von dem folgenden Schaftabschnitt durch einen nutartigen Einschnitt getrennt ist und der Bohrabschnitt in Form von über die axiale Länge des Anschlagbundes durchgehenden Bohrnuten ausgebildet ist. Dies bringt einerseits wesentlich bessere Gestaltungsmöglichkeiten für den Anschlagbund mit sich, andererseits wird die Herstellung in einem Walzverfahren ermöglicht. Weiters bieten sich auf diese Art und Weise eine Vielzahl von Konstruktionsmöglichkeiten für die Ausbildung des Bohrabschnittes an, und zwar insbesondere mit über die axiale Länge des Anschlagbundes durchgehenden Bohrnuten. Es ist damit auch eine ordnungsgemäße Abführung von Bohrspänen möglich, da unmittelbar hinter dem eigentlichen Bohrabschnitt eine Art Aufnahmenut geschaffen ist.

In diesem Zusammenhang sieht eine spezielle Ausgestaltung vor, daß der Durchmesser des Anschlagbundes und somit der Bohrdurchmesser des Bohrabschnittes größer ist als der Außendurchmesser des in Richtung zum freien Ende der Schraube folgenden Gewindebereiches. Dadurch ist auch nach der Durchdringung eines Unterbaues, einer Schiene oder eines Steges an dem dem Gewindeende gegenüberliegenden Übergang eine relativ großflächige Abstützung möglich, ohne daß dabei der Abstützbereich durch die Ausbildung des Bohrabschnittes wesentlich verkleinert würde.

Zusätzlich ist es in einem solchen Falle vorteilhaft, wenn der Durchmesser des Anschlagbundes und somit der Bohrdurchmesser des Bohrabschnittes größer ist als der Durchmesser des in Richtung zum Kopf der Schraube folgenden Schaftabschnittes. Bei einer solchen Ausführung können nicht nur eine wesentliche Materialeinsparung bei der Herstellung der Schraube erzielt und der dem Kopf der Schraube zugewandte Gewindebereich im Durchmesser kleiner gehalten werden, sondern auch das Eindrehmoment beim Setzen der Schraube wird dadurch noch verringert. Es ist ferner auch ein gutes Durchdringen des im Durchmesser größeren Schaftabschnittes mit entsprechendem Spiel möglich. Vor allem kann dadurch eine optimale Ausgestaltung des Bohrabschnittes erfolgen, weil dieser an einem vom eigentlichen Schaftabschnitt beabstandeten Bereich ausgebildet werden kann.

Eine Möglichkeit zur weiteren Optimierung der erfindungsgemäßen Schraube sieht vor, daß zusätzlich zu dem am Übergang zwischen den beiden Schaftabschnitten ausgebildeten Bohrabschnitt am freien Ende des Schaftes ein Bohrteil angeordnet oder ausgebildet ist. Gerade durch diese zusätzliche Maßnahme werden zwei mit Abstand voneinander angeordnete Bohrbereiche geschaffen, die einerseits auf den Schaftabschnitt kleineren Durchmessers und andererseits auf den Schaftabschnitt größeren Durchmessers abgestimmt sind. Es bedarf daher überhaupt keines Vorbohrens mehr an den Abdeckplatten oder Schienen und auch nicht im Unterbau. In einem Arbeitsgang werden also die Bohrungen in den gegenseitig zu befestigenden Teilen hergestellt und diese Teile werden in exaktem Abstand zueinander fixiert.

Weitere erfindungsgemäße Merkmale und besondere Vorteile werden in der nachstehenden Beschreibung anhand der Zeichnungen noch näher erläutert. Es zeigen:
Fig. 1 eine Ansicht einer Schraube;
Fig. 2 ein vergrößertes Detail der Schraube;
Fig. 3 ein Einsatzbeispiel für eine solche Schraube in gesetztem Zustand;
Fig.4 und 6 Ausführungsvarianten der Schraube;
Fig. 5 ein vergrößertes Detail der Schraube gemäß Fig. 4;
Fig. 7 eine Teilansicht einer der Fig. 6 ähnlichen Ausführung.

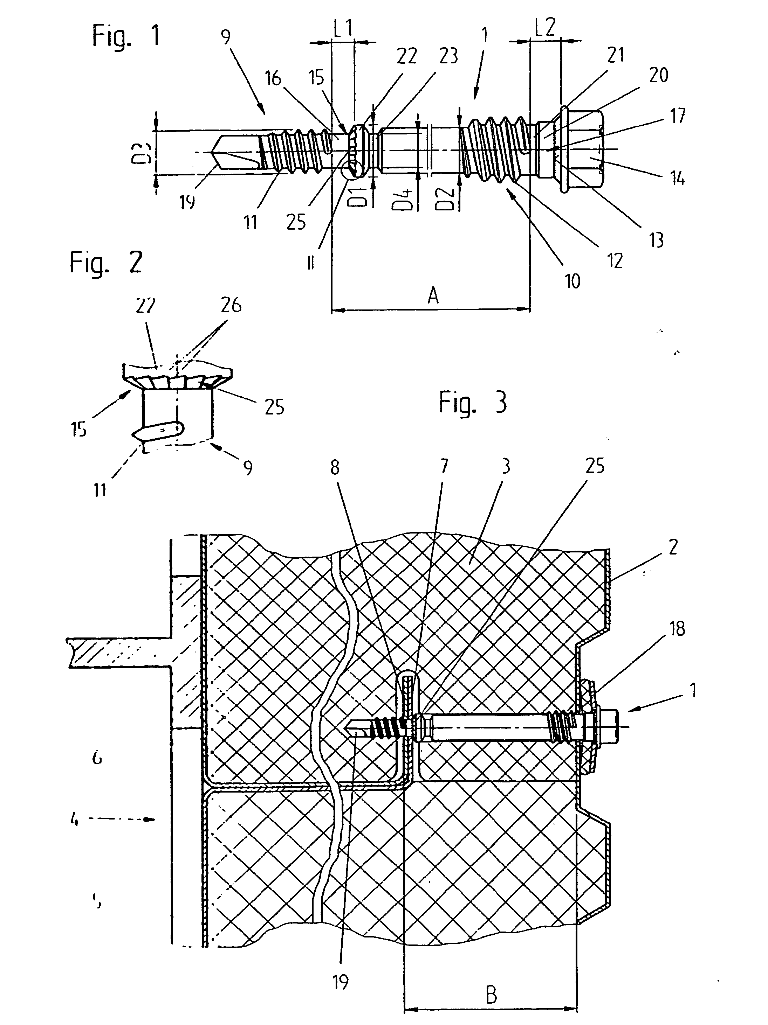

Die Schraube 1 dient zur Abstandsbefestigung von Abdeckplatten 2 unter Zwischenschaltung von Isoliermaterialien 3 an einem Unterbau 4. Die zu befestigenden Abdeckplatten 2 und der Unterbau 4 sind aus relativ dünnwandigem Material gebildet. Der Unterbau 4 ist beim Beispiel nach Fig. 3 aus Profilblechen 5 und 6 gebildet, welche einen Steg 7 aufweisen. Die Isoliermaterialien 3 sind an wenigstens einer Stirnseite mit einem entsprechenden Schlitz 8 versehen und können dadurch zumindest vorerst lagegesichert, z.B. an einer Fassade, montiert werden. Die dann anzubringenden Abdeckplatten 2 sind mit einem entsprechenden Profil versehen und bilden die Außenwandung des Gebäudes oder dergleichen. Da die Isoliermateriahen 3 weich sind und kaum auf Druck belastet werden können, bedarf es einer besonderen Abstandsbefestigung der Abdeckplatten 2 gegenüber dem Unterbau 4 bzw. im konkreten Fall gegenüber dem Steg 7, welcher aus den beiden Profilblechen 5 und 6 gebildet ist. Die Schraube 1, die sich für diese Abstandsbefestigung besonders eignet, weist zwei Schaftabschnitte 9 und 10 auf, welche mit Gewindebereichen 11 und 12 mit verschiedenen Durchmessern ausgestattet sind. Die Unterseite 13 des Kopfes 14 der Schraube 1 und der Übergang 15 zwischen den beiden Schaftabschnitten 9 und 10 bilden Anschläge. Sowohl an die Unterseite 13 des Kopfes 14 als auch an den Übergang 15 schließen gewindefreie Bereiche 16 und 17 an. Die axiale Länge L1 bzw. L2 dieser gewindefreien Bereiche 16 bzw. 17 ist einerseits auf die Dicke des Steges 7 und andererseits auf die Dicke der zu befestigenden Abdeckplatten 2 und der zusätzlich eingesetzten Unterleg- und Dichtscheiben 18 abgestimmt. Sobald die Schraube 1 ganz eingedreht ist, greift der Steg 7 zur Gänze in den gewindefreien Bereich 16 ein und die Abdeckplatte 2 und die Unterleg- und Dichtscheibe 18 werden zwischen der Unterseite 13 am Kopf 14 und dem Ende des Gewindebereiches 12 im gewindetreien Bereich 17 eingespannt.

Die dem Kopf 14 der Schraube 1 bzw. dem Übergang 15 zugewandten Enden der Gewindebereiche weisen einen Abstand A voneinander auf, der dem Abstand B zwischen den Abdeckplatten 2 bzw. den entsprechenden Schienen und dem Unterbau 4 bzw. dem Steg 7 entspricht.

Die Gewindebereiche 11 und 12 haben zur Verhinderung von Verschiebungen der beiden auf Abstand miteinander zu befestigenden Elemente beim Eindrehen der Schraube vorteilhaft die gleiche Gewindesteigung. Von Vorteil kann auch eine zwei- oder mehrgängige Ausführung des Gewindes der Gewindebereiche 11 und 12 sein.

Die Schraube kann also nach dem fertigen Setzen immer in entsprechendem Maße weitergedreht werden, so daß ein Setzvorgang sehr einfach durchgeführt werden kann. Gearbeitet werden kann allein mit einem Tiefenanschlag, wobei es unwesentlich ist, ob die Schraube noch ein oder zwei Umdrehungen weitergedreht wird oder nicht. Das Gewinde ist mit Beendigung des Setzvorganges nicht mehr im Eingriff mit der zu befestigenden Abdeckplatte oder der Schiene und dem Steg 7 des Unterbaues 4.

Bei der Ausgestaltung nach Fig. 1 ist im besonderen vorgesehen, daß am Übergang 15 zwischen den zwei Schaftabschnitten 9 und 10 ein Bohrabschnitt 25 ausgebildet ist. An diesen Bohrabschnitt 25 schließen dann der gewindefreie Bereich 16 und der Gewindebereich 11 in Richtung zum freien Ende der Schraube hin an. Bei der besonderen Konstruktion der Schraube 1 nach den Fig. 1 bis 3 wird der Bohrabschnitt 25 von einer Vielzahl von am Übergang angeordneten, radial ausgerichteten, eine Art Sägezahnung darstellenden und spitzwinklig zur Schraubachse verlaufenden Schneidkanten 26 gebildet.

Die Durchmesserbereiche der Schaftabschnitte 9 und 10 müssen nicht sehr wesentlich voneinander differieren. Es muß lediglich zwischen den beiden Schaftabschnitten 9 und 10 ein entsprechender Übergang 15 vorhanden sein, der einen Anschlag auf der einen Seite des gewindefreien Bereiches 16 bildet. Daß dieser Anschlag im Bereich des Überganges 15 von einem Bohrabschnitt 25 gebildet ist, spielt dabei keine Rolle, da die Schraube infolge der gewindefreien Bereiche frei drehbar ist und nach dem Setzen der Schraube keinerlei Bohrdruck mehr ausgeübt werden kann, da der Kopf der Schraube auf den zu befestigenden Abdeckplatten oder Schienen aufliegt.

Eine vorteilhafte Ausgestaltung der Schraube 1 sieht vor, am freien Ende derselben einen Bohrteil 19 anzuordnen oder auszubilden. Ob es sich dabei um einen vollen Bohrteil oder aber um ein beispielsweise in einen Schlitz am freien Ende der Schraube eingesetztes Bohrplättchen handelt, ist nicht von Bedeutung. Auch der Bohrabschnitt 25 könnte gegebenenfalls von einem oder mehreren eingesetzten Plättchen gebildet werden. Wenn mit einem Bohrteil 19 gearbeitet wird, dann ist es auf jeden Fall zweckmäßig, wenn die axiale Länge der Gewindebereiche 11 und 12 auf den einzelnen Schaftabschnitten 9, 10 gleich groß ist. Dadurch wird verhindert, daß einer der Gewindebereiche 11 oder 12 während des Bohrvorganges im Eingriff ist, wodurch der Bohrvorgang infolge des großen Vorschubes gestört würde.

Eine besondere Ausbildung kann noch für den gewindefreien Bereich 17 unterhalb des Kopfes 14 der Schraube vorgesehen werden. Wie in der Zeichnung dargestellt, sind unmittelbar an den Kopf 14 der Schraube 1 anschließend ein Abschnitt 20 mit einem größeren Durchmesser und ein Abschnitt 21 mit kleinerem Durchmesser vorhanden. Der kopfnahe Abschnitt 20 mit dem größeren Durchmesser ist dem Durchmesser einer Unterleg- und/oder Dichtscheibe 18 angepaßt. Der folgende Abschnitt 21 entspricht im Durchmesser im wesentlichen dem Kerndurchmesser des folgenden Gewindebereiches 12.

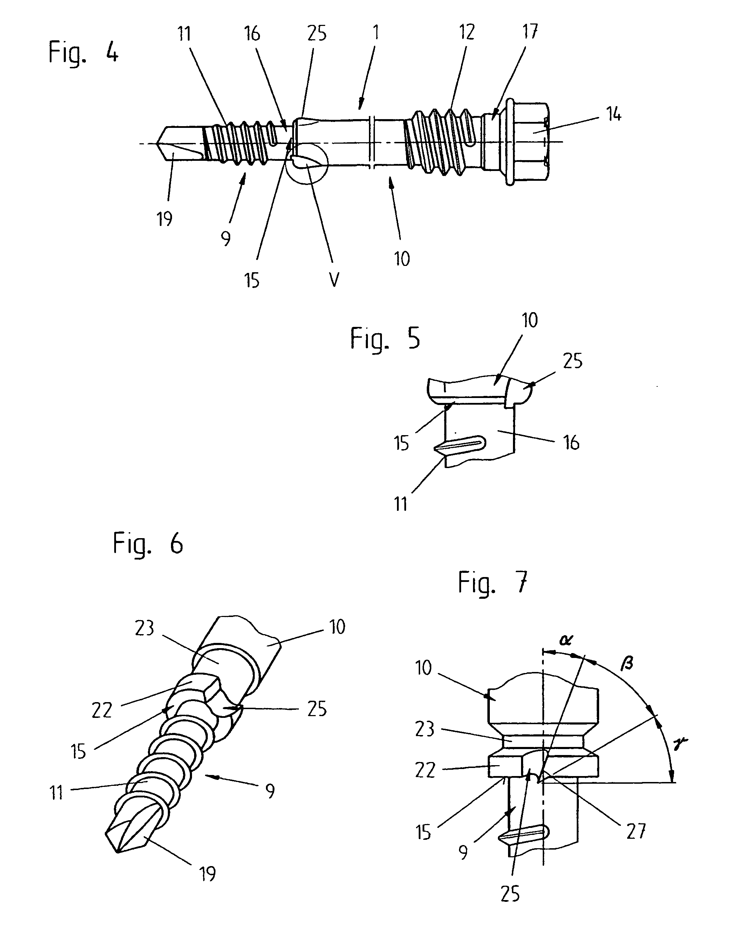

Bei der Ausgestaltung nach den Fig. 4 und 5 wird am Übergang 15 zwischen den beiden Schaftabschnitten 9 und 10 ebenfalls ein Bohrabschnitt 25 gebildet, wobei hier nach Art eines üblichen Bohrteiles (wie beispielsweise beim Bohrteil 19) Bohrschneiden und -nuten eingeformt werden. Diese Bohrnuten und -schneiden sind vorteilhaft in Eindrehdrichtung der Schraube 1 gesehen spitzwinklig zur Schraubenachse geneigt, so daß eine Bohrwirkung wie bei einer vollständig ausgebildeten Bohrspitze erreicht wird. Dabei ist es vorteilhaft, wie auch aus der Zeichnung ersichtlich ist, daß diese Bohrschneiden und gegebenenfalls auch die Bohrnuten des Bohrabschnittes 25 den Übergang 15 geringfügig in Richtung zum freien Ende der Schraube 1 hin überragen. Es kommen dann diese Bohrschneiden und Bohrnuten zum Einsatz, bevor der Übergang 15 auf den zu befestigenden Abdeckplatten oder Schienen zur Anlage kommt.

Sowohl bei einer Schraube gemäß den Fig. 1 bis 3, als auch bei der Schraube nach Fig. 6 wird der Übergang 15 von einem an dem in Richtung zum Kopf 14 der Schraube 1 nächstfolgenden Schaftabschnitt 10 angeordneten Anschlagbund 22 gebildet. Ein entsprechender Anschlagbund 22 wäre aber auch bei einer Konstruktion nach Fig. 4 denkbar und umgekehrt wäre auch eine Ausbildung des Bohrabschnittes wie in den Fig. 4 und 5 bei den Ausgestaltungen nach den Fig. 1 bis 3 sowie 6 denkbar. Der Anschlagbund 22 kann etwas über den Schaftabschnitt vorstehen. Bei der gezeigten Konstruktion ist vorgesehen, den Anschlagbund 22 durch einen nutartigen Einschnitt 23 von dem folgenden Schaftabschnitt 10 zu trennen.

Der Durchmesser D1 des Anschlagbundes 22 und somit auch der Bohrdurchmesser des Bohrabschnittes 25 sind beim dargestellten Beispiel größer als der Außendurchmesser des in Richtung zum freien Ende der Schraube 1 folgenden Gewindebereiches 11. Zudem ist der Durchmesser des Anschlagbundes 22 größer als der Durchmesser D2 des in Richtung zum Kopf 14 der Schraube 1 folgenden Schaftabschnittes 10. Schließlich ist der Durchmesser D4 des Grundes des nutartigen Einschnittes 23 kleiner als der Durchmesser D2 des in Richtung zum Kopf der Schraube folgenden Schaftabschnittes 10. Weiter kann vorgesehen werden, daß der Durchmesser D4 des Grundes des nutartigen Einschnittes 23 annähernd dem Kerndurchmesser des in Richtung zum freien Ende der Schraube folgenden Gewindeabschnittes 11 entspricht. Diese Maßangaben tragen nicht nur vorteilhaft zu einer optimalen Fertigung einer solchen Schraube 1, insbesondere auch des Bohrabschnittes 25, bei, sondern auch zur bestmöglichen Wirkung bei einem bestimmungsgemäßen Einsatz.

In Fig. 6 ist eine Ausführungsvariante gezeigt, bei der der Anschlagbund 22 ebenfalls vom folgenden Schaftabschnitt 10 durch einen nutartigen Einschnitt 23 getrennt ist. Der Bohrabschnitt 25 ist hier in Form von über die axiale Länge des Anschlagbundes 22 durchgehenden Bohrnuten gebildet. Auch bei dieser Anordnung ist es denkbar, daß die Bohrnuten und -schneiden in Eindrehrichtung der Schraube gesehen spitzwinklig zur Schraubenachse geneigt sind, und daß gegebenenfalls die Bohrschneiden und auch die Bohrnuten des Bohrabschnittes 25 den Übergang 15 geringfügig in Richtung zum freien Ende der Schraube 1 hin überragen.

Aus der Darstellung in Fig. 7 ist ersichtlich, daß gerade bei entsprechender Konstruktion mit einem Anschlagbund 22 die Kenngrößen des Bohrabschnittes 25 optimal eingestellt werden können. Die Bohrschneiden 27 können einen entsprechend abgestimmten Spanwinkel α, einen Keilwinkel β und einen Freiwinkel γ aufweisen. Insbesondere mit der Veränderung des Freiwinkels γ kann die Bohrleistung optimiert werden.

Mittels der beschriebenen Schraube wird eine optimale Möglichkeit zur Abstandsbefestigung von Abdeckplatten oder Schienen gegenüber einem Unterbau geschaffen, wobei sowohl die zu befestigenden Elemente als auch der Unterbau selbst relativ dünnwandig ausgebildet sein können. Gerade dann, wenn zwischen den auf Abstand zu befestigenden Elementen keine stützenden oder kraftaufnehmenden Elemente vorhanden sind, also beispielsweise relativ weiches Isoliermaterial dazwischengeschaltet ist, kann eine feste Verbindung mit exaktem Abstand erzielt werden. Trotzdem können jedoch entsprechende Belastungen, z.B. Sogkräfte bei einer Windbelastung, aufgenommen werden.

Auch ist es denkbar, mehr als zwei Schaftabschnitte 9 und 10 und somit ebenfalls mehr als zwei Gewindebereiche 11 und 12 vorzusehen. Dannzumal ist es auch möglich, mehr als zwei Elemente in entsprechendem Abstand voneinander zu befestigen. Diese Möglichkeit besteht dank der besonderen konstruktiven Gestaltung der Schraube, denn alle in entsprechendem Abstand voneinander zu befestigenden Elemente werden schlußendlich in einem gewindefreien Bereich gehalten bzw. eingespannt oder zumindest lose, jedoch gegen zu weites axiales Verschieben gesichert gehalten. Bei einer solchen Konstruktion wäre dann bei jedem Übergang zwischen zwei Schaftabschnitten ein entsprechender Bohrabschnitt ausgebildet.

In der vorstehenden Beschreibung ist von einem als Anschlag wirkenden Übergang 15 die Rede, der als Ende des Schaftabschnittes 10 mit größerem Durchmesser oder als Anschlagbund 22 ausgeführt sein kann. Im Rahmen der Erfindung ist es möglich, an dem als Anschlag wirkenden Übergang 15 ein Linksgewinde vorzusehen, welches bei entsprechendem Eindrehen der Schraube 1 im Uhrzeigersinn nicht mehr in das Loch im Unterbau eindringen kann. Es ist dann praktisch am Übergang 15 zwischen diesem Linksgewinde und dem gewindefreien Bereich 16 der Bohrabschnitt 25 ausgebildet. Das eingesetzte Linksgewinde kann über eine entsprechende Länge des Schaftes, z.B. bis zum Gewindebereich 10 hin geführt werden, so daß auch die Herstellung dieses Linksgewindes wesentlich einfacher wird.

Die erfindungsgemäße Schraube kann aus einem Kohlenstoffstahl gefertigt werden, wobei insbesondere die eine Bohrung herstellenden bzw. die Bohrung erweiternden Abschnitte entsprechend gehärtet werden können. Die Schraube kann aber auch aus einem rostfreien Stahl gefertigt werden, wobei durch entsprechende Ausgestaltung des Bohrteiles 19 und des Bohrabschnittes 25 und/oder durch besondere Bohrverfahren die erforderlichen Bohrungen auch mit einer durchgehend aus einem rostfreien Stahl gefertigten Schraube gefertigt werden können. Es ist aber auch denkbar, in eine Schraube aus rostfreiem Material entsprechend Bohrteile und Bohrabschnitte aus einem härtbaren Material einzusetzen bzw. anzuformen. Die Herstellung des Bohrteiles 19 und des Bohrabschnittes 25 kann durch Schlagen (Zwicken) oder Walzen erfolgen.

Eingesetzt werden kann die erfindungsgemäße Schraube aber nicht nur im Fassadenbau bei der Befestigung von Abdeckplatten unter Zwischenschaltung von Isoliermaterialien, sondern überall dort, wo in irgendeiner Weise Abdeckplatten, Schienen oder andere Elemente mit Abstand gegenüber einem Unterbau, der ebenfalls relativ dünnwandig ausgebildet ist, befestigt werden sollen.

## Patentansprüche

1. Schraube zur Abstandsbefestigung von Abdeckplatten oder Schienen, gegebenenfalls unter Zwischenschaltung von Isoliermaterialien, an einem Unterbau, mit einem mit wenigstens zwei Schaftabschnitien (9, 10) mit Gewindebereichen (11, 12) verschiedenen Durchmessers versehenen Schaft, einem am freien Ende des Schaftes ausgebildeten Bohrtell (19) und einem mit einem Werkzeugangriff ausgestatteten Kopf, wobei die Unterseite (13) des Kopfes (14) der Schraube (1) und ein Obergang (16) zwischen zwei Schaftabschnitten (9, 10) Anschlage bilden und sich sowohl an die Unterseite (13) des Kopfes (14) als auch an den Übergang (15) zwischen zwei Schaftabschnitten (9, 10) mit Gewindebereichen (11, 12) verschiedenen Durchmessers an dem jeweiligen Schaftabschnitt (9, 10) ein gewindefreier Bereich (16, 17) anschließt, wobei die axiale Länge (L1, L2) dieser gewindefreien Bereiche (16, 17) einerseits auf die Dicke der zu befestigenden Abdeckplatten (2) oder Schienen und gegebenenfalls eingesetzter Unterleg- und/oder Dichtscheiben (18) und andererseits auf die Dicke des Unterbaues (4) abgestimmt ist, so daß, sobald die Schraube (1) die zu befestigenden Abdeckplatten oder Schienen durchdrungen hat, keiner der Gewindebereiche (11, 12) mehr im Eingriff mit den zu befestigenden Abdeckplatten oder Schienen bzw. dem Unterbau ist, **dadurch gekennzeichnet, dass** an dem Übergang (15) zwischen den zwei Schaftabschnitten (9, 10) ein Bohrabschnitt (25) zum Aufweiten der vom Bohrteil (19) hergestellten Bohrung ausgebildet ist und sich an diesen Bohrabschnitt (25) der gewindefreie Bereich (16) und der Gewindebereich (11) des dem freien Ende der Schraube (1) zugewandten Schaftabschnittes (9) kleineren Durchmessers anschließen.

2. Schraube nach Anspruch 1, **dadurch gekennzeichnet, daß** der Bohrabschnitt (25) an dem Übergang (15) an einem an den in Richtung zu dem Kopf (14) der Schraube nächstfolgenden Schaftabschnitt (10) angeordneten Anschlagbund (22) ausgebildet ist.

3. Schraube nach Anspruch 1, **dadurch gekennzeichnet, daß** der Bohrabschnitt (25) von wenigstens zwei kurzen Bohrnuten und -schneiden am Übergang (15) zwischen den beiden Schaftabschnitten (9, 10) gebildet ist.

4. Schraube nach Anspruch 3, **dadurch gekennzeichnet, daß** die Bohrnuten und -schneiden des Bohrabschnittes (25) In Eindrehrichtung der Schraube (1) gesehen spitzwinklig zur Schraubenachse geneigt sind.

5. Schraube nach Anspruch 3 oder 4, **dadurch gekennzeichnet, daß** die Bohrschneiden und gegebenenfalls auch die Bohrnuten des Bohrabschnittes (25) den Übergang (15) geringfügig in Richtung zu dem freien Ende der Schraube (1) hin überragen.

6. Schraube nach Anspruch 1, **dadurch gekennzeichnet, daß** der Bohrabschnitt (25) von einer Vielzahl von an dem Übergang (15) angeordneten, radial ausgerichteten, eine Art Sägezahnung darstellenden und spitzwinklig zur Schraubenachse verlaufenden Schneidkanten (26) gebildet ist.

7. Schraube nach Anspruch 2, **dadurch gekennzeichnet, daß** der Anschlagbund (22) von dem folgenden Schaftabschnitt (10) durch einen nutartigen Einschnitt (23) getrennt ist und der Bohrabschnitt (25) in Form von über die axiale Länge des Anschlagbundes (22) durchgehenden Bohrnuten ausgebildet ist.

8. Schraube nach den Ansprüchen 2 und 7, **dadurch gekennzeichnet, daß** der Durchmesser (D1) des Anschlagbundes (22) und somit der Bohrdurchmesser des Bohrabschnittes (25) größer ist als der Außendurchmesser (D3) des in Richtung zu dem freien Ende der Schraube (1) folgenden Gewindebereiches (11).

9. Schraube nach einem der Ansprüche 2, 5 und 8, **dadurch gekennzeichnet, daß** der Durchmesser (D1) des Anschlagbundes (22) und somit der Bohrdurchmesser des Bohrabschnittes (25) größer ist als der Durchmesser (D2) des in Richtung zu dem Kopf (14) der Schraube (1) folgenden Schaftabschnittes (10).

10. Schraube nach einem der Ansprüche 1 bis 9, **dadurch gekennzeichnet, daß** zusätzlich zu dem an dem Übergang (15) zwischen den beiden Schaftabschnitten (9, 10) ausgebildeten Bohrabschnitt (25) an dem freien Ende des Schaftes ein Bohrteil (19) angeordnet oder ausgebildet ist.

## Claims

1. A screw for fastening at a distance cover plates or rails, optionally with the interposition of insulating materials, to a substructure, having a shank provided with at least two shank portions (9,10) with threaded zones (11,12) of different diameter, a drilling member (19) formed at the free end of the shank and a head provided with a tool engagement portion, wherein the underside (13) of the head (14) of the screw (1) and a transition (15) between two shank portions (9,10) form abutments and both on the underside (13) of the head (14) and at the transition (15) between two shank portions (9, 10) with threaded zones (11,12) of different diameter on the respective shank portion (9,10) is adjoined by a threadless zone (16,17), wherein the axial length (L1,L2) of these threadless zones (16,17) is matched, on the one hand, to the thickness of the cover plates (2) or rails to be fastened and optionally inserted washers and/or sealing rings (18) and, on the other hand, to the thickness of the substructure (4) so that, as soon as the screw (1) has penetrated the cover plates or rails to be fastened, none of the threaded zones (11,12) is in engagement with the cover plates or rails to be fastened, **characterised in that** a drilling section (25) for widening the bore produced by the drilling member (19) is formed at the transition (15) between the two shank portions (9,10) and this drilling section (25) is adjoined by the threadless zone (16) and the threaded zone (11) of the shank portion (9) of smaller diameter nearest the free end of the screw (1).

2. A screw according to Claim 1, **characterised in that** the drilling section (25) at the transition (15) is formed on an abutment collar (22) disposed on the shank portion (10) disposed on the next following shank portion (10) in the direction of the screw head (14).

3. A screw according to Claim 1, **characterised in that** the drilling section (25) is formed by at least two drilling slots and drill bits at the transition (15) between the two shank portions (9, 10) .

4. A screw according to Claims 3, **characterised in that**, viewed in the screwing-in direction of the screw (1), the drilling slots and drill bits of the drilling section (25) are inclined at an acute angle to the screw axis.

5. A screw according to Claim 3 or 4, **characterised in that** the drill bits and optionally also the drilling slots of the drilling section (25) project slightly beyond the transition (15) in the direction of the free end of the screw (1) .

6. A screw according to Claim 1, **characterised in that** the drilling section (25) is formed by a plurality of radially aligned cutting edges (26) provided at the transition (15), constituting a type of sawtooth arrangement and extending at an acute angle to the screw axis.

7. A screw according to Claim 2, **characterised in that** the abutment collar (22) is separated from the following shank portion (10) by a groove-like indentation (23) and the drilling section (25) is in the form of drilling slots continuing over the axial length of the abutment collar (22).

8. A screw according to Claims 2 and 7, **characterised in that** the diameter (D1) of the abutment collar (22) and thus the drilling diameter of the drilling section (25) is greater than the outer diameter (D3) of the threaded zone (11) following in the direction of the free end of the screw (1).

9. A screw according to any one of Claims 2, 5 and 8, **characterised in that** the diameter (D1) of the abutment collar (22) and thus the drilling diameter of the drilling section (25) is greater than the diameter (D2) of the shank portion (10) following in the direction of the head (14) of the screw (1).

10. A screw according to any one of Claims 1 to 9, **characterised in that**, in addition to the drilling section (25) formed at the transition (15) between the two shank portions (9,10), a drilling member (19) is provided or formed at the free end of the shank.

## Revendications

1. Vis pour fixer des plaques de recouvrement ou des rails sur une infrastructure en conservant un écart, éventuellement en intercalant des matériaux isolants, comportant une tige munie d'au moins deux segments de tige (9, 10) garnie de zones filetées (11, 12) de différents diamètres, une partie de perçage (19) formée à l'extrémité libre de la tige et une tête munie d'une prise pour outil,
dans laquelle le côté inférieur (13) de la tête (14) de la vis (1) et une transition (15) entre deux segments de tige (9, 10) forment des butées et, sur chacun des segments de tige (9, 10), une zone (16, 17) sans filetage succède aussi bien au côté inférieur (13) de la tête (14) qu'à la transition (15) entre deux segments de tige (9, 10) garnis de zones filetées (11, 12) de différents diamètres,
la longueur axiale (L1, L2) de ces zones (16, 17) sans filetage est ajustée d'une part à l'épaisseur des plaques de recouvrement (2) ou des rails à fixer et éventuellement des rondelles plates et/ou des rondelles d'étanchéité (18) utilisées et d'autre part à l'épaisseur de l'infrastructure (4) de sorte que, dès que la vis (1) a traversé les plaques de recouvrement ou les rails à fixer, aucune des zones filetées (11, 12) n'est plus en contact avec les plaques de recouvrement ou avec les rails à fixer ou encore avec l'infrastructure,
**caractérisée en ce qu'**
un segment de perçage (25) est formé à la transition (15) entre les deux segments de tige (9, 10), pour élargir le perçage produit par la partie de perçage (19) et à ce segment de perçage (25) succède la zone sans filetage (16) et la zone filetée (11) du segment de tige (9) de plus petit diamètre orienté vers l'extrémité libre de la vis (1).

2. Vis selon la revendication 1,
**caractérisée en ce que**
le segment de perçage (25) est formé à la transition (15) sur un collet de butée (22) situé sur le segment de tige (10) immédiatement adjacent en direction de la tête (14) de la vis.

3. Vis selon la revendication 1,
**caractérisée en ce que**
le segment de perçage (25) est formé par au moins deux rainures de perçage et deux tranchants de perçage courts à la transition (15) entre les deux segments de tige (9, 10).

4. Vis selon la revendication 3,
**caractérisée en ce que**
les rainures de perçage et les tranchants de perçage du segment de perçage (25) sont inclinés à angle aigu en regardant dans la direction d'engagement de la vis (1).

5. Vis selon la revendication 3 ou 4,
**caractérisée en ce que**
les tranchants de perçage et éventuellement aussi les rainures de perçage du segment de perçage (25) dépassent légèrement de la transition (15) en direction de l'extrémité libre de la vis (1).

6. Vis selon la revendication 1,
**caractérisée en ce que**
le segment de perçage (25) est constitué d'un grand nombre de bords tranchants (26) placés à la transition (15), orientés radialement, en forme de dents de scie et il forme un angle aigu par rapport à l'axe de la vis.

7. Vis selon la revendication 2,
**caractérisée en ce que**
le collet de butée (22) est séparé du segment de tige (10) suivant par une entaille (23) en forme de rainure et le segment de perçage (25) se présente sous forme de rainures de perçage qui traversent toute la longueur axiale du collet de butée (22).

8. Vis selon l'une des revendications 2 à 7,
**caractérisée en ce que**
le diamètre (D1) du collet de butée (22) et donc le diamètre de perçage du segment de perçage (25) est supérieur au diamètre extérieur (D3) de la zone filetée (11) suivante en direction de l'extrémité libre de la vis (1).

9. Vis selon l'une des revendications 2, 5 et 8,
**caractérisée en ce que**
le diamètre (D1) du collet de butée (22) et donc le diamètre de perçage du segment de perçage (25) est supérieur au diamètre (D2) du segment de tige (10) suivant en direction de la tête (14) de la vis (1).

10. Vis selon l'une des revendications 1 à 9,
**caractérisée en ce qu'**
une partie de perçage (19) est placée ou formée à l'extrémité libre de la tige en plus du segment de perçage (25) formé à la transition (15) entre les deux segments de tige (9, 10).
